(19) Europäisches Patentamt

European Patent Office

Office européen des brevets

(11) **EP 1 284 039 B1**

(12) **EUROPÄISCHE PATENTSCHRIFT**

(45) Veröffentlichungstag und Bekanntmachung des Hinweises auf die Patenterteilung:
**17.12.2003  Patentblatt 2003/51**

(21) Anmeldenummer: **01942982.8**

(22) Anmeldetag: **25.04.2001**

(51) Int Cl.⁷: **H02H 6/00**, B60R 16/02

(86) Internationale Anmeldenummer:
**PCT/DE01/01608**

(87) Internationale Veröffentlichungsnummer:
**WO 01/091264 (29.11.2001 Gazette 2001/48)**

(54) **THERMISCHE ÜBERWACHUNG EINES ELEKTRISCHEN LASTELEMENTES**

THERMAL MONITORING OF AN ELECTRIC LOAD ELEMENT

SURVEILLANCE THERMIQUE D'UN ELEMENT ELECTRIQUE DE CHARGE

(84) Benannte Vertragsstaaten:
**AT BE CH CY DE DK ES FI FR GB GR IE IT LI LU MC NL PT SE TR**

(30) Priorität: **25.05.2000  DE 10026057**

(43) Veröffentlichungstag der Anmeldung:
**19.02.2003  Patentblatt 2003/08**

(73) Patentinhaber: **Brose Fahrzeugteile GmbH & Co. KG**
**96450 Coburg (DE)**

(72) Erfinder:
• **HEINRICH, Peter**
**98553 Hinternah (DE)**
• **PREIS, Karl-Heinz**
**77830 Bühlertal (DE)**
• **NICOLAI, Steffen**
**98693 Ilmenau (DE)**
• **HUHN, Michael**
**98739 Schmiedefeld (DE)**
• **EHRENPFORDT, Jochen**
**14947 Nuthe-Urstromtal (DE)**

(74) Vertreter: **Baumgärtel, Gunnar, Dr. et al**
**Patentanwälte Maikowski & Ninnemann,**
**Postfach 15 09 20**
**10671 Berlin (DE)**

(56) Entgegenhaltungen:
**EP-A- 0 443 465**      **WO-A-99/50098**
**DE-A- 4 038 198**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Überwachung eines elektrischen Lastelementes auf thermische Überlastung in einem Kraftfahrzeug.

In Kraftfahrzeugen dient eine Batterie, die beispielsweise durch einen Generator (Lichtmaschine) geladen wird, zur Speicherung elektrischer Energie. Einige elektrische Verbraucher werden bei abgeschaltetem Antriebsmotor des Kraftfahrzeuges allein durch die in der Batterie gespeicherte Energie versorgt. Zu diesen die gespeicherte Energie der Batterie reduzierenden Verbrauchern gehören beispielsweise Sicherheitsvorrichtungen, Türschlösser, Diebstahlsicherungen oder der Betrieb von Verstelleinrichtungen.

Die in der Batterie (Akkumulator) gespeicherte elektrische Energie muß zudem nach einem längeren Stillstand des Antriebsmotors, also ohne Ladung durch den Generator, ausreichen, ein Anlassen des Antriebsmotors auch nach mehreren Tagen oder sogar mehreren Wochen zu ermöglichen, es muß also auch in diesem Fall noch genügend elektrische Energie in der Batterie gespeichert sein.

In modernen Kraftfahrzeugen sind eine große Vielzahl von elektrischen Verbrauchern, beispielsweise elektrische integrierte Schaltkreise für Überwachungsfunktionen und Steuerungsfunktionen sowie ansteuerbare Lastelemente, wie beispielsweise Elektromotoren für Sitzverstellungen oder elektrische Fensterheber, sowie Schlösser, Diebstahlsicherungen und Leistungshalbleiter, die eine Reduktion der in der Batterie gespeicherten Energie verursachen, jedoch als Komfortfunktionen zumindest zeitweise zur Verfügung stehen müssen. Auch für die Überwachungsfunktionen und Steuerungsfunktionen benötigen die Schaltkreise ständig elektrische Energie. Aufgrund der zunehmend großen Vielzahl der Schaltkreise wird der Energieverbrauch merklich erhöht, so daß die Energiereserve der Batterie schneller aufgebraucht ist.

Eine thermische Überwachung eines Lastelementes ist insbesondere notwendig für Lastelemente, wie beispielsweise Elektromotoren für Verstelleinrichtungen, die eine maximale Temperatur nicht überschreiten dürfen, weil andernfalls eine irreparable thermische Beschädigung den Elektromotor stillsetzt. Die während des Betriebes des Lastelementes auftretende Verlustleistung in den Ankerwicklungen (des Elektromotors) führen zu einer starken Erwärmung des Elektromotors.

Um die Temperatur der Ankerwicklungen ohne einen Sensor zu ermitteln ist aus der DE 42 16 040 A1 ein Verfahren bekannt, daß die Erwärmung des Elektromotors anhand der Verlustleistung oder einer hierzu proportionalen Größe, der Drehzahl des Elektromotors bestimmt. Beim Erreichen eines Schwellwertes wird die Bestromung des Elektromotors abgeschalten und der Elektromotor so gegen thermische Überlast geschützt.

Die Bestimmung eines Abkühlverhaltens des Elektromotors ist aus der DE 40 38 198 A1 bekannt.

Hierzu wird das Abkühlverhalten über der Zeit in einem Mikroprozessor erfaßt und der momentane Temperaturwert ständig mittels eines Algorithmus in der Steuerungsvorrichtung errechnet. Nachteilig ist die hohe Stromaufnahme des Schaltkreises beziehungsweise des Mikroprozessors zur Berechnung des Abkühlverhaltens in der Steuerungsvorrichtung.

Daher stellt sich der Erfindung die Aufgabe ein Verfahren anzugeben, das während der Betriebsphase des Lastelementes das Lastelement auf thermische Überlast überwacht und zumindest zwischen den Betriebsphasen den Stromverbrauch des Überwachungsschaltkreises deutlich reduziert, ohne die Temperatur des Lastelementes mit einem Temperatursensor zu messen.

Diese Aufgabe wird durch das Verfahren zur Überwachung auf thermische Überlastung mit den Merkmalen des Patentanspruchs 1 gelöst. Vorteilhafte Weiterbildungen der Erfindung sind den Unteransprüchen zu entnehmen.

Im Verfahren zur Überwachung auf thermische Überlastung eines elektrischen Lastelementes in einem Kraftfahrzeug sind weitere elektrische Verbraucher in eine Bereitschaftsphase schaltbar. In der Bereitschaftsphase sollten nur die Teile eines Schaltkreises des Verbrauchers mit sehr geringer Stromaufnahme weiterhin aktiv sein, die beispielsweise zum Aufwecken, also Aktivieren der nicht aktiven Teile des Schaltkreises für einen Betrieb nötig sind.

Die Überwachung des Lastelementes, beispielsweise eines Elektromotors oder eines diskreten Leistungshalbleiters, erfolgt demnach durch eine Steuerungsvorrichtung zumindest anhand einer berechneten Lasttemperaturkenngröße. Die thermische Überwachung kann dabei noch weitere Größen einbeziehen, beispielsweise einen Lastwiderstand, so daß ein aufgrund thermischer Überlast verursachter Kurzschluß detektiert wird.

Zur Ausführung der Berechnung der Lasttemperaturkenngröße ist in der Steuerungsvorrichtung beispielsweise ein anwenderspezifischer Schaltkreis (ASIC) mit einem implementierten Algorithmus integriert. Die Lasttemperaturkenngröße wird zur Überwachung mit Schwellwerten verglichen. Die Schwellwerte werden beispielsweise vorgegeben, indem sie entsprechend des Typus des Lastelementes in einem nichtflüchtigen Speicher gespeichert werden. Alternativ können die Schwellwerte aufgrund sich ändernder äußerer Parameter variiert werden. Im Falle einer drohenden thermischen Überlastung wird beim Überschreiten eines Schwellwertes eine an das Lastelement abgegebene elektrische Leistung durch die Steuerungsvorrichtung beispielsweise heruntergeregelt oder abgeschalten.

Während einer ersten Betriebsphase wird zur Berechnung der Lasttemperaturkenngröße eine Verlustleistung des Lastelementes oder eine hierzu im wesentlichen proportionale Größe ausgewertet. Dies geschieht beispielsweise entsprechend der in der DE 42 16 040 A1 dargelegten Methode oder alternativ anhand der gemessenen Erwärmung einer Halbleiter-Leistungsstufe zur Steuerung eines Laststromes des Lastelementes. Neben der Verlustleistung beziehungsweise der proportionalen Größe können weitere Faktoren, beispielsweise ein Tastverhältnis eines bekannten Puls-Weiten-Modulations-Signals zur Ansteuerung des Lastelementes, ausgewertet werden. Innerhalb der Betriebsphase wird das Lastelement zumindest zeitweise bestromt, was zu einer Erwärmung des Lastelementes und einer Veränderung der erfindungsgemäß zu berechnenden Lasttemperaturkenngröße führt.

Während einer oder mehrerer Bereitschaftsphasen, auch sleep mode genannt, zwischen der ersten Betriebsphase und einer zweiten Betriebsphase wird die Steuerungsvorrichtung im wesentlichen stromlos geschaltet. Die im wesentlichen stromlos geschaltete Steuerungsvorrichtung ermöglicht keine Auswertung durch einen Algorithmus, da die Versorgung der Steuerungsvorrichtung mit elektrischer Energie während der Bereitschaftsphase nur Funktionen mit sehr geringem Energieverbrauch ermöglicht. So werden alle Energieverbraucher, beispielsweise ein Mikrocontroller der Steuerungsvorrichtung, und damit auch das Lastelement stromlos geschaltet. Ein Aktivierungsschaltkreis mit einer sehr geringen Stromaufnahme, beispielsweise weniger als 100µA, ermöglicht die Aktivierung der nicht mehr aktiven Teile der Steuerungsvorrichtung.

Nach einem erneuten Einschalten der Steuerungsvorrichtung in der zweiten Betriebsphase wird mindestens eine für den Einschaltzeitpunkt charakteristische erste Kenngröße zur Berechnung der aktuellen Lasttemperaturkenngröße ausgewertet. Da sich die Abkühlung des Lastelementes über eine längere Zeitspanne, beispielsweise 30 Minuten, erstreckt, ist auch eine erste Kenngröße für einen Zeitpunkt innerhalb eines Zeitintervalls, beispielsweise 30 Sekunden vor oder nach dem Einschaltzeitpunkt, für den Einschaltzeitpunkt charakterisierend. Dabei können eine oder mehrere erste Kenngrößen, die den Einschaltzeitpunkt der Steuerungsvorrichtung charakterisieren, bestimmt und ausgewertet werden.

Die aktuelle Lasttemperaturkenngröße charakterisiert die Temperatur des Lastelementes zum Einschaltzeitpunkt. Liegt sie oberhalb eines Schwellwertes zum risikolosen Einschalten des Lastelementes, kann das Lastelement nicht betrieben werden. Liegt sie unterhalb, wird das Lastelement bestromt und die Lasttemperaturkenngröße wiederum ausgewertet anhand der Verlustleistung oder einer hierzu im wesentlichen proportionalen Größe, sowie der zuletzt aktuellen Lasttemperaturkenngröße des Einschaltzeitpunktes. Das Verfahren kann für mehrere Wechsel zwischen Bereitschaftsphase und Betriebsphase mehrere Male wiederholt werden.

Ein konkretes Beispiel zur Berechnung der Lasttemperaturkenngröße wird in den Ausführungsbeispielen näher erläutert.

In einer vorteilhaften Ausgestaltung der Erfindung wird mindestens eine für einen Abschaltzeitpunkt der ersten Betriebsphase charakteristische zweite Kenngröße in einem nichtflüchtigen Speicher gespeichert. Zur Berechnung der Lasttemperaturkenngröße werden die erste Kenngröße und die zweite Kenngröße ausgewertet. Die zweite Kenngröße ist - wie auch die erste Kenngröße für den Einschaltzeitpunkt - für den Abschaltzeitpunkt innerhalb einer gewissen längeren Zeitspanne, also einer zeitlichen Unschärfe von beispielsweise 20 Sekunden, charakterisierend. Auch mehrere den Abschaltzeitpunkt charakterisierende zweite Kenngrößen werden in einem nichtflüchtigen Speicher gespeichert. Der nichtflüchtige Speicher ist in der Steuerungsvorrichtung oder in einem mit der Steuerungsvorrichtung über eine Datenverbindung verbundenes Elektronikmodul angeordnet. Als nichtflüchtige Speicher eignen sich beispielsweise EEPROMs oder Flashmemory. Mit der Verwendung des nichtflüchtigen Speichers bleiben vorteilhafterweise Daten zur Berechnung der Lasttemperaturkenngröße auch über die Bereitschaftphase hinaus erhalten.

In einer Vorzugsvariante der Erfindung wird ein vom Lastelement im wesentlichen thermisch entkoppelter Meßkörper während der ersten Betriebsphase, beispielsweise durch einen separaten Heizstrom, erwärmt. Die erste Kenngröße wird aus einer für den Einschaltzeitpunkt charakteristischen Temperaturmeßgröße des Meßkörpers ermittelt. Zusätzlich können weitere erste Kenngrößen, beispielsweise aus einer Umgebungstemperatur, ermittelt werden. Als Meßkörper bieten sich insbesondere Körper an, die über im wesentlichen dieselbe oder eine größere Zeitspanne abkühlen wie das Lastelement, so daß die Lasttemperaturkenngröße über die gesamte Zeitspanne des Abkühlens aus der Temperaturmeßgröße des Einschaltzeitpunktes bestimmt werden kann. Eine im wesentlichen thermische Entkopplung zwischen dem Lastelement und dem Meßkörper ist beispielsweise durch eine örtliche Trennung oder ein thermisches Trennetement zwischen Lastelement und Meßkörper gegeben. Beide Körper, sowohl der Meßkörper als auch das Lastelement sind im abgekühlten Zustand auf derselben Umgebungstemperatur, beispielsweise der Temperatur im Kraftfahrzeuginnenraum. Der Vorteil der Verwendung des thermisch entkoppelten Meßkörper ist, daß anhand der Temperatur des Meßkörpers, der während der Bereitschaftsphase mit dem Lastelement abkühlt, ein Abkühlungsverhalten des Lastelementes bestimmt werden kann, ohne einen am Lastelement angeordneten Sensor zu benötigen.

In einer Weiterbildung der Vorzugsvariante steuert eine Leistungsstufe der Steuerungsvorrichtung einen Laststrom. In Doppelfunktion dient ein Teil der Leistungsstufe zur Kühlung beispielsweise eines Leistungs-MOSFETs und wird als Meßkörper durch den Laststrom erwärmt. Dabei ist der thermisch entkoppelte Meßkörper als Kühlkörper ein Teil einer Leistungsstufe der Steuerungsvorrichtung. Die Leistungsstufe weist beispielsweise einen Leistungshalbleiter, beispielsweise einen MOSFET, und einen Kühlkörper auf. Der Leistungshalbleiter der Steuerungsvorrichtung ist mit dem Kühlkörper dabei thermisch gekoppelt. Die Steuerungsvorrichtung steuert mit dem durch den Kühlkörper gekühlten Leistungshalbleiter den Laststrom, beispielsweise eines Elektromotors als Lastelement. Der Kühlkörper wird durch den Laststrom über den Leistungshalbleiter während der Betriebsphase erwärmt. Das Aufwärmungsverhalten und Abkühlungsverhalten des Kühlkörpers wird durch einen in der Steuerungsvorrichtung beispielsweise integrierten Temperatursensor, beispielsweise eine temperaturabhängige Diode oder ein Thermoelement zum Erzeugen einer Thermospannung, gemessen. Für Steuerungsvorrichtungen mit Leistungshalbleitern ist ein Kühlkörper meistens ein bereits vorhandenes Bauteil, so daß ohne zusätzliche Bauelemente die Überwachungsfunktion mit in die Steuerungsvorrichtung implementiert werden kann.

In einer besonders einfachen Ausgestaltung der Weiterbildung der Erfindung wird aufgrund eines ähnlichen thermischen Verhaltens die Leistungsstufe und das Lastelement im wesentlichen proportional erwärmt und abgekühlt. Zur Berechnung der aktuellen Lasttemperaturkenngröße wird die charakteristische Temperaturmeßgröße und die Proportionalität ausgewertet. Es wird kein Speicher zur Speicherung eines Wertes für die Überwachung benötigt. Auch der in der Steuerungsvorrichtung implementierte Algorithmus erfordert nur wenige Programmschritte. Diese Ausführungsform der Erfindung ermöglicht ebenfalls eine thermische Überwachung durch einen analogen Schaltkreis in der Steuerungsvorrichtung.

In einer Ausgestaltung der Erfindung werden mehrere Lastelemente von der Steuerungsvorrichtung überwacht. Der Meßkörper (als Teil der Leistungsstufe) wird durch die jeweiligen Lastströme der Lastelemente erwärmt. Die Erwärmung durch die einzelnen Lastströme ist dabei von weiteren Parametern, beispielsweise der aktuellen Temperatur des Meßkörpers, abhängig. Dabei werden die Lastelemente gleichzeitig oder nacheinander angesteuert, so daß der jeweils unterschiedliche Zeitraum zur Erwärmung zur Auswertung berücksichtigt wird.

Um eine einfache Auswertung der charakteristischen Temperaturmeßgröße zu ermöglichen wird in einer ersten Variante der Ausgestaltung nur das Lastelement mit der größten Lasttemperaturkenngröße, also das Lastelement mit der größten Überhitzungsgefahr, überwacht. Für die anderen Lastelemente wird zum Einschaltzeitpunkt der zweiten Betriebsphase die aktuelle Lasttemperaturkenngröße des überwachten Lastelementes übernommen. Diese Vereinfachung ermöglicht eine Überwachung auf thermische Überlast der Lastelemente ohne für jedes Lastelement die Lasttemperaturkenngröße zu berechnen und auszuwerten.

Um jedes einzelne Lastelement gemäß der Ausgestaltung dagegen einzeln zu überwachen, wird vorteilhafterweise zur Berechnung der jeweiligen aktuellen Lasttemperaturkenngröße eine Temperaturmeßgröße für den Abschaltzeitpunkt gemessen. Die Temperaturmeßgröße und die Lasttemperaturkenngrößen des Abschaltzeitpunktes der ersten Betriebsphase werden als zweite Kenngrößen gespeichert. So kann vorteilhafterweise das Erwärmungsverhalten und Abkühlungsverhalten für die einzelnen Lastelemente während der ersten Betriebsphase berechnet werden und deren Wert zum Abschaltzeitpunkt gespeichert werden. Aus der Abkühlung des Meßkörpers wird nachfolgend beispielsweise die Länge der Bereitschaftsphase zurück gerechnet.

In einer alternativen Weiterbildung der Vorzugsvariante ist der thermische entkoppelte Meßkörper ein separater, hauptsächlich als Vergleichskörper dienender Meßkörper, der durch eine durch die Steuerungsvorrichtung gesteuerte Heizleistung erwärmt wird. Der Meßkörper ist vorzugsweise auf einer Platine der Steuerungsvorrichtung angeordnet. Der Meßkörper ist beispielsweise ein Widerstand, der bereits mit einem Bruchteil, beispielsweise 1%, eines Laststromes des Lastelementes erwärmt wird. Um das thermische Verhalten des Meßkörpers an das des Lastelementes anzupassen, wird beispielsweise ein Wärmeübergangswiderstand des Meßkörpers zur umgebenden Luft erhöht, indem der Widerstand beispielsweise in einen schlecht wärmeleitenden Keramikmantel oder Kunststoffmantel eingebettet wird. Der Meßkörper wird alternativ außerhalb der Steuerungsvorrichtung angeordnet. Dies ermöglicht den geheizten Meßkörper vorteilhafterweise für weitere Funktionen, beispielsweise als Heizung eines Türschlosses des Kraftfahrzeugs einzusetzen.

Vorteilhafterweise wird entsprechend einer Ausgestaltung der alternativen Weiterbildung der Erfindung der separate Meßkörper unabhängig von der Verlustleistung des Lastelementes durch die gesteuerte Heizleistung auf eine vorbestimmte Temperatur mit einer korrespondierenden Temperaturmeßgröße erwärmt, um die Zeitspanne der Abkühlung aus dem bekannten Abkühlungsverhalten des Meßkörpers zu ermitteln. Dieser Teil des Verfahrens zur thermischen Überwachung nutzt den Meßkörper zur Messung einer Zeitspanne der Abkühlung des Lastelementes, indem die vorbestimmte Temperaturmeßgröße des Abschaltzeitpunktes und die charakteristische Temperaturmeßgröße als erste Kenngröße ausgewertet werden. Zur Berechnung der aktuellen Lasttemperaturkenngröße werden die bestimmte Zeitspanne und ein Endwert der Lasttemperaturkenngröße der ersten Betriebsphase als zweite Kenngröße ausgewertet.

Eine Ausgestaltung der Weiterbildung der Erfindung sieht vor, daß die Heizleistung zur Erwärmung des Meßkörpers mit der Verlustleistung des Lastelementes oder der hierzu im wesentlichen proportionalen Größe korreliert wird. Die Heizleistung und die Verlustleistung werden vorteilhafterweise über Proportionalitätsfaktoren, Exponentialfaktoren oder andere hierzu sinnvoll verwendbare mathematischen Beziehungen korreliert. Die einfachste Korrelation ist eine direkte Proportionalität zwischen der Heizleistung und der Verlustleistung beziehungsweise zwischen dem Heizstrom und dem Laststrom. Zur Berechnung der aktuellen Lasttemperaturkenngröße werden die charakteristische Temperaturmeßgröße und die Korrelation der Heizleistung mit der Verlustleistung beziehungsweise der zur Verlustleistung im wesentlichen proportionalen Größe in der Steuerungsvorrichtung oder einem Elektronikmodul ausgewertet. Dabei kann die Korrelation für die Erwärmung und Abkühlung des Meßkörper für jedes Lastelement unterschiedlich sein, um eine entsprechende Anpassung an unterschiedliches Erwärmungsverhalten und Abkühlungsverhalten zu ermöglichen. So kann vorteilhafterweise der eine Meßkörper zur Überwachung von Lastelementen verschiedenen Typs, beispielsweise unterschiedliche Elektromotortypen, beispielsweise für den Spiegel und den Fensterheber einer Kraftfahrzeugtür, mehrfach verwendet werden.

In einer weiteren Ausgestaltung wird die Korrelation, insbesondere in Abhängigkeit von einer Umgebungstemperatur, durch mindestens einen Korrelationsfaktor variiert. Ein derartiger Korrelationsfaktor ist beispielsweise der zuvor genannte Exponentialfaktor, der das Abkühlungsverhalten des Lastelementes beschreiben kann. Einer oder mehrere der Korrelationsfaktoren werden vorteilhafterweise als zweite Kenngrößen gespeichert.

Vorteilhafterweise wird zur Berechnung der Lasttemperaturkenngröße eine durch ein unterschiedliches thermisches Verhalten des Lastelementes und des Meßkörpers verursachte Verzögerungszeit zwischen dem Beginn der Erwärmung oder Abkühlung des Lastelementes und dem des Meßkörpers ausgewertet. Wird das Abkühlverhalten beispielsweise nach einem Wärmestrom-Netzmodell berechnet, so wirken sich die unterschiedlichen Wärmekapazitäten von dem Lastelement und von dem Meßkörper als unterschiedliche Zeitkonstanten aus, die die Verzögerungszeit verursachen. Die Einbeziehung der Zeitkonstanten erhöht die Genauigkeit der Berechnung merklich.

Darüber hinaus ist es von Bedeutung, daß zur Messung der Temperaturmeßgröße ein mit dem Meßkörper thermisch gekoppelter Temperatursensor abgefragt wird. Der Temperatursensor ist beispielsweise in dem Meßkörper integriert oder an dem Meßkörper befestigt, um einen geringen thermischen Übergangswiderstand zu gewährleisten.

In einer alternativen Variante der Erfindung ist kein Meßkörper mit einer zugehörigen Temperaturmeßgröße nötig. Es wird vielmehr die erste Kenngröße über eine Datenverbindung von einem Elektronikmodul des Kraftfahrzeugs zur Steuerungsvorrichtung übertragen. Als Datenverbindung eignen sich kabelgebundene elektrische oder optische Datenverbindungen, wie beispielsweise eine serielle Datenleitung oder ein Systembus, aber auch alle anderen Arten von Datenverbindungen, wie Infrarotlichtübertragung oder Funksysteme. Ein mit der Steuerungsvorrichtung in Verbindung stehendes Elektronikmodul ist beispielsweise ein zentrales Modul oder Diagnosemodul zur Steuerung oder Diagnose aller Kraftfahrzeugfunktionseinheiten. Die Datenverbindung besteht von dem Elektronikmodul zur Steuerungsvorrichtung oder bidirektional.

Entsprechend einer Weiterbildung der alternativen Variante der Erfindung wird als erste Kenngröße eine Zeitkennung von einer Systemuhr über die Datenverbindung an die Steuerungsvorrichtung übermittelt. Die Zeitkennung von der Systemuhr ist beispielsweise eine konkrete Uhrzeit oder eine der fortlaufenden Nummern eines Zählwerkes, die als binäre oder hexadezimale Zahlen vorliegen können. Die Systemuhr wird nicht stromlos geschaltet, so daß die Systemuhr auch im geparkten Zustand des Kraftfahrzeugs fortlaufend weiterläuft. Jedoch benötigt die Systemuhr nur einen sehr geringen Strom, vergleichbar einer Armbanduhr.

Die Systemuhr ist beispielsweise in der Nähe der Steuerungsvorrichtung oder im Halbleiterchip der Steuerungsvorrichtung angeordnet und die Zeitkennung wird über eine in der Betriebsphase versorgte serielle oder parallele Schnittstelle als Datenverbindung ausgelesen. So entfällt vorteilhafterweise die Übertragung und Signalisierung über die Datenverbindung oder über ein Netzwerk aus mehreren Datenverbindungen. Zudem ist die Steuerungsvorrichtung mit der Systemuhr als Funktionseinheit von anderen Funktionseinheiten des Kraftfahrzeugs unabhängig und kann auch bei einem Ausfall der anderen Funktionseinheiten als separate Funktionseinheit weiter betrieben werden.

In einer Ausgestaltung der Weiterbildung wird mittels eines Datenprotokolls die Zeitkennung an die Steuerungsvorrichtung über einen Systembus adressiert. In diesem Fall ist der Systembus die bidirektionale Datenverbindung zwischen der Steuerungsvorrichtung und beispielsweise dem zentralen Elektronikmodul. Die Adressierung erfolgt beispielsweise mit einer die Steuerungsvorrichtung charakterisierende Bitfolge oder mit einem die Steuerungsvorrichtung charakterisierenden Spreizkode, der durch eine entsprechende Faltung und Dekodierung im Empfänger eine bekannte Separierung der Daten ermöglicht. Die Steuerungsvorrichtung fordert die Zeitkennung über ein Datenprotokoll von dem Elektronikmodul an. Das Datenprotokoll regelt dabei in bekannter Weise die Datenreihenfolge und Verifizierung. Wird die Zeitkennung über einen Systembus übermittelt, ist nur eine zentrale Systemuhr notwendig, die oft in einem Kraftfahrzeug bereits vorhanden ist.

Mehrere Lastelemente werden durch die Steuerungsvorrichtung vorteilhafterweise überwacht, indem zur Berechnung die Lasttemperaturkenngrößen zum Abschaltzeitpunkt und der Abschaltzeitpunkt gespeichert und zum Einschaltzeitpunkt ausgewertet werden. Alternativ werden zur Berechnung die Höchstwerte der Lasttemperaturkenngrößen und die Ausschaltzeitpunkte als zweite Kenngrößen der jeweiligen Lastelemente gespeichert.

In einer vorteilhaften Weiterbildung der alternativen Variante wird ein Endwert der Lasttemperaturkenngröße der ersten Betriebsphase über einen Systembus als Datenverbindung von der Steuerungsvorrichtung an das Elektronikmodul übermittelt. Der Endwert wird mit einem ersten Zeitwert im Elektronikmodul gespeichert. Nach dem Einschaltzeitpunkt wird der erste Zeitwert und der den Einschaltzeitpunkt charakterisierende zweite Zeitwert als erste Kenngröße, oder die Zeitdifferenz zwischen dem zweiten Zeitwert und dem ersten Zeitwert als erste Kenngröße, sowie der Endwert von dem Elektronikmodul an die Steuerungsvorrichtung übermittelt. Für diese Weiterbildung ist kein Speicher in der Steuerungsvorrichtung nötig. Die über den Systembus übertragenen Daten werden in dem Elektronikmodul, beispielsweise in einem RAM, gespeichert. So können besonders einfach thermische Überlasten in einem Diagnosefile protokolliert werden und stehen dem Servicefachmann des Kraftfahrzeugs in der Werkstatt zur Verfügung.

Zusätzlich werden vorteilhafterweise in einem Datenprotokoll Lastelementkennungen über den Systembus übermittelt. Der übertragene erste Zeitwert, zweite Zeitwert und der Endwert werden den Lastelementkennungen zugeordnet. Die Lastelementkennung ist beispielsweise eine Bitfolge mit der die Steuerungsvorrichtung oder das Elektronikmodul die über den Systembus übertragenen Daten den Lastelementen zur Überwachung zuordnen kann.

Im Folgenden wird die Erfindung anhand von Ausführungsbeispielen bezugnehmend auf zeichnerische Darstellungen näher erläutert.

Dabei zeigen

FIG 1 eine schematische Abfolge einer Aktivierung und thermischen Überwachung eines Lastelementes,

FIG 2 eine erste schematische Darstellung einer zeitlichen Abfolge zur Berechnung einer Lasttemperaturkenngröße,

FIG 3 eine zweite schematische Darstellung einer zeitlichen Abfolge zur Berechnung einer Lasttemperaturkenngröße, und

FIG 4 eine dritte schematische Darstellung einer zeitlichen Abfolge zur Berechnung einer Lasttemperaturkenngröße.

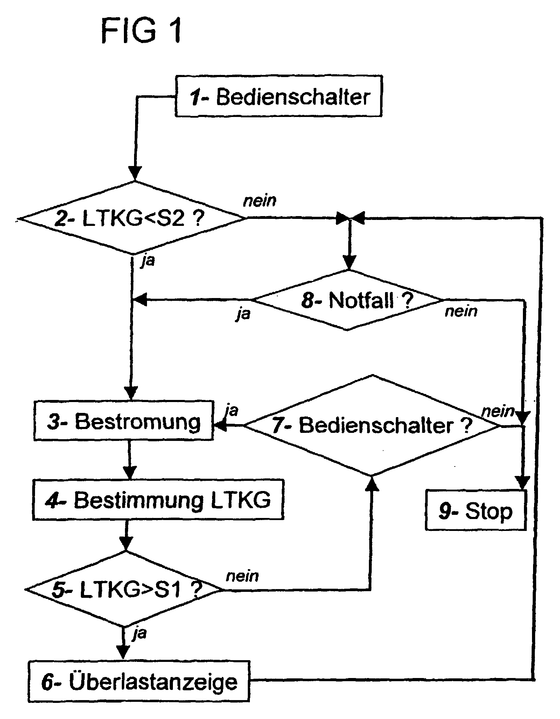

In FIG 1 ist eine schematische Abfolge einer Aktivierung und thermischen Überwachung eines Lastelementes dargestellt. Beispielhaft wird die Aktivierung und thermische Überwachung für einen Elektromotor eines Fensterhebers als Lastelement beschrieben.

Im Schritt 1 wird von einem Fahrzeuginsassen ein Bedienschalter zum Schließen der Fensterscheibe betätigt. Der Bedienschalter ist mit der Steuerungsvorrichtung verbunden und wird von der Steuerungsvorrichtung oder einem mit der Steuerungsvorrichtung verbundenen Elektronikmodul zyklisch abgefragt, ob ein geschlossener Kontakt vorliegt.

Nach der Abfrage des Bedienschalters wird in Schritt 2 die Lasttemperaturkenngröße LTKG mit einem zweiten Schwellwert S2 verglichen. Ist die Lasttemperaturkenngröße LTKG kleiner als der zweite Schwellwert S2 ist die Temperatur des Elektromotors unkritisch und der Elektromotor wird in Schritt 3 bestromt. Andernfalls, für eine Lasttemperaturkenngröße LTKG größer als der zweite Schwellwert S2, wird in Schritt 8 überprüft ob ein Notfall vorliegt.

Die Bestromung aus Schritt 3 wird so lange fortgeführt, bis die Abfolge in Schritt 9 zu einem Stop des Elektromotors führt. Während der Bestromung des Elektromotors wird in Schritt 4 die Lasttemperaturkenngröße LTKG in Intervallen zyklisch bestimmt. Nach der jeweiligen Bestimmung der Lasttemperaturkenngröße LTKG wird die Lasttemperaturkenngröße LTKG in Schritt 5 mit einem ersten Schwellwert S1 verglichen. Ist die Lasttemperaturkenngröße LTKG nicht größer als der erste Schwellwert S1, so wird in Schritt 7 überprüft, ob der Bedienschalter noch betätigt wird, und im positiven Fall wird die Bestromung von Schritt 3 fortgesetzt.

Übersteigt die Lasttemperaturkenngröße LTKG dagegen den ersten Schwellwert S1, wird in Schritt 6 eine Überlastanzeige aktiviert und dem Insassen oder einem Diagnosegerät die thermische Überlast angezeigt. Nach der Anzeige der Überlast in Schritt 6 wird in Schritt 8 überprüft, ob ein Notfall, beispielsweise das Einklemmen eines Körperteils des Insassen zwischen Türrahmen und Fensterscheibe, vorliegt. Im Notfall wird eine Bestromung selbst bei thermischer Überlast zugelassen, um durch die Umkehrung der Bewegungsrichtung des Elektromotors ein Freilassen des eingeklemmten Insassen zu ermöglichen. Liegt kein Notfall in Schritt 8 vor, wird in Schritt 9 die Bestromung des Elektromotors gestoppt, um den Elektromotor vor einer thermischen Beschädigung zu schützen.

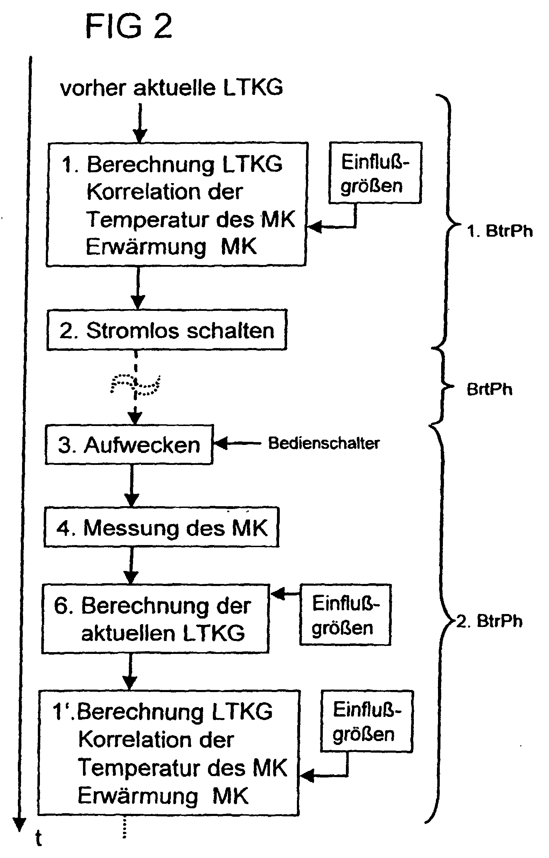

In FIG 2 ist eine erste schematische Darstellung einer zeitlichen Abfolge zur Berechnung der Lasttemperaturkenngröße LTKG dargestellt. Zur Bestimmung der Lasttemperaturkenngröße LTKG wird ein Kühlkörper MK mit einem Leistungshalbleiter in Doppelfunktion genutzt, um zum einen den Leistungshalbleiter zur Steuerung eines Elektromotors beispielsweise zur Sitzverstellung zu kühlen und zum anderen den Kühlkörper MK als Meßkörper MK zu verwenden, dessen Temperatur mittels einer Temperaturmeßgröße zur Berechnung der Lasttemperaturkenngröße LTKG gemessen wird. Die Lasttemperaturkenngröße LTKG oder die Temperaturmeßgröße ist beispielsweise direkt die Temperatur in Celsius, Kelvin oder Fahrenheit, oder es werden für ein Byte beispielsweise 128 Temperaturstufen mit linearen, degressiven oder progressiven Temperaturintervallen eingeteilt. Die Temperaturmeßgröße ist eine Vergleichsgröße aus der mittel eines angepaßten Algorithmus die Lasttemperaturkenngröße LTKG berechnet wird.

Zeitlich vor Schritt 1 wird eine aktuelle Lasttemperaturkenngröße LTKG angenommen. Liegt zwischen der ersten Betriebsphase 1.BtrPh und einer vorherigen Betriebsphase ein Zeitintervall, daß größer als ein Zeitschwellwert ist, wird die aktuelle Lasttemperaturkenngröße LTKG vor der ersten Betriebsphase 1.BtrPh gleich einer Umgebungstemperaturmeßgröße gesetzt, da anzunehmen ist, daß der Elektromotor auf die Temperatur der Umgebung des Elektromotors abgekühlt ist. Der Zeitschwellwert ist beispielsweise größer als 5 Stunden. Zur Messung der Temperatur der Umgebung wird die Umgebungstemperaturmeßgröße aus der Thermospannung eines auf der Steuertrngsvorrichtung integrierten Thermoelementes als Meßsensors bestimmt.

In Schritt 1 wird die Lasttemperaturkenngröße LTKG berechnet und der Kühlkörper MK durch die Verlustleistung des Leistungshalbleiters erwärmt. Die Berechnung erfolgt anhand eines Algorithmus in einem Mikrocontroller durch die Auswertung der Verlustleistung oder einer hierzu im wesentlichen proportionalen Größe, beispielsweise des Laststromes durch die Spulenwicklungen des Elektromotors oder der Drehzahl des Elektromotors, wie es beispielsweise aus der DE 42 16 040 A1 bekannt ist. Die Parameter des Algorithmus, beispielsweise ein Logarithmusfaktor oder ein Proportionalfaktor, werden für einen Elektromotortyp anhand einer Wärmekapazität und einem Wärmeübergangswiderstand zur umgebenden Luft festgelegt und sind in einem Speicher (ROM) der Steuerungsvorrichtung gespeichert. Die Umgebungstemperaturmeßgröße wird ebenfalls als temperaturabhängige Einflußgröße des Algorithmus zur Berechnung Lasttemperaturkenngröße LTKG ausgewertet.

Alternativ zu der zuvor beschriebenen Berechnungsmethode, werden die Parameter des Algorithmus und auch die Art des Algorithmus (Wurzelterme, Proportionalterme, Exponentialterme) entsprechend veränderter Umgebungsbedingungen mit veränderten Parametem angesetzt und der Algorithmus jeweils neu gebildet. So wird aus elektromotorspezifischen Kennwerten und beispielsweise der Umgebungstemperaturmeßgröße die Parameter und Faktoren des Algorithmus angeglichen. Je nach Elektromotortyp, mechanischer Befestigung und Befestigungsort werden die elektromotorspezifischen Kennwerte angepaßt. Ist der Elektromotor beispielsweise an ein Metallteil eines Kraftfahrzeugsitzes befestigt und mit diesem über ein Metallstück thermisch gekoppelt charakterisiert die zusätzliche Wärmekapazität des Metallteils die Kennwerte des gekoppelten Elektromotors. Weitere Einflußfaktoren sind der Befestigungsort, beispielsweise in der Nähe eines Kühlventilators oder innerhalb des Sitzpolsters, sowie die Leistung des Elektromotors in Bezug auf die zu bewegende Last, beispielsweise eines Elektromotors für eine Sitzhöhenverstellung beziehungsweise eines Elektromotors für eine Kopfstütze. Weitere Einflußgrößen sind der Laststrom oder die Drehzahl des Elektromotors, sowie das Tastverhältnis eines Puls-Weiten-Modulations-Steuersignals (PWM).

Zum Ende der ersten Betriebsphase 1.BtrPh wird die Steuerungsvorrichtung im Schritt 2 bis auf einen Schaltkreis mit geringer Stromaufnahme zum Aufwekken der Steuerungsvorrichtung stromlos geschalten. Währen der Bereitschaftsphase BrtPh kühlt der Elektromotor und der Kühlkörper MK des Leistungshalbleiter ab. Um eine besonders einfache Berechnung der Lasttemperaturkenngröße LTKG zu ermöglichen wird das Abkühlverhalten des Kühlkörpers auf das des Elektromotors abgestimmt. So wird die Größe und die Oberfläche des Kühlkörpers so abgestimmt, daß der Kühlkörper und der Elektromotor sich proportional erwärmen und in der Bereitschaftsphase BrtPh im wesentlichen proportional abkühlen. Entsprechend dieser Proportionalität wird die Temperatur des Kühlkörpers MK mit der Verlustleistung und damit der Lasttemperaturkenngröße LTKG korreliert.

Im Schritt 3 wird die Steuerungsvorrichtung durch eine Bedienung des Bedienschalters aufgeweckt, in dem der Schaltkreis zum Einschalten der Steuerungsvorrichtung die in der Bereitschaftsphase abgeschalteten Teile der Steuerungsvorrichtung an die Betriebsspannung schaltet und der Mikrocontroller der Steuerungsvorrichtung eine Routine startet. Neben dem Bedienschalter führen andere betätigte Funktionseinheiten zu einem Wecken der Steuerungsvorrichtung in der zweiten Betriebsphase 2.BtrPh. Wird beispielsweise ein Zündschlüssel eines Kraftfahrzeugs gedreht oder eine Lichtmaschine wird durch einen Antriebsmotor angetrieben, wird über eine Signalleitung ein generiertes Signal zum Wecken aller Funktionseinheiten auch an die Steuerungsvorrichtung übertragen. Andere Ursachen zur Generierung des Signals sind beispielsweise die Betätigung des Türschlosses des Kraftfahrzeugs oder ein von einem Modul gesteuerter Notbetrieb.

Eine für einen Einschaltzeitpunkt der Steuerungsvorrichtung charakteristische Temperaturmeßgröße wird in Schritt 4 bestimmt. Hierzu steuert der Mikrocontroller einen im Kühlkörper MK integrierten Temperatursensor, beispielsweise einen temperaturabhängigen Widerstand an. Aus der charakteristischen Temperaturmeßgröße und einem Proportionalitätsfaktor, der die Proportionalität zwischen dem Abkühlungsverhalten des Kühlkörper MK und dem des Elektromotors darstellt, wird in Schritt 6 die aktuelle Lasttemperaturkenngröße LTKG des Einschaltzeitpunktes bestimmt. Die Berechnung der Lasttemperaturkenngröße LTKG in Schritt 1' erfolgt analog der Berechnung aus Schritt 1 mit veränderten Umgebungsbedingungen, beispielsweise einer höheren Umgebungstemperaturmeßgröße.

Die aktuelle Lasttemperaturkenngröße LTKG in der zweiten Betriebsphase 2.BtrPh ist möglicherweise von der der ersten Betriebsphase 1.BtrPh für eine kurze Bereitschaftsphase BrtPh wesentlich erhöht.

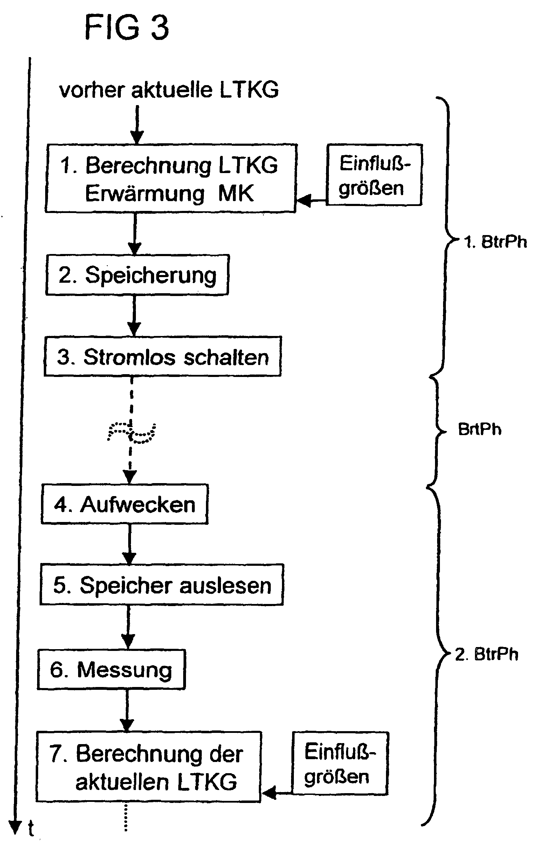

In FIG 3 ist eine alternative, zweite schematische Darstellung einer zeitlichen Abfolge zur Berechnung einer Lasttemperaturkenngröße LTKG dargestellt. Alternativ zur Berechnung der Lasttemperaturkenngröße LTKG aus FIG 2 wird kein Algorithmus verwendet. Standartmeßwerte der jeweiligen Elektromotortypen werden aus mehreren Meßreihen eines Elektromotortyps, beispielsweise durch ein Mitteln der Meßergebnisse, ermittelt. Mehrere Standartmeßwerte werden für unterschiedliche Temperaturen eines Temperaturbereiches in einer Tabelle in der Steuerungsvorrichtung gespeichert. Zudem werden die Standartmeßwerte durch verschiedene Einflußgrößen, beispielsweise der Umgebungstemperaturmeßgröße, gewichtet. Zur Berechnung der Lasttemperaturkenngröße LTKG werden Zwischenwerte der Standartmeßwerte beispielsweise linear interpoliert.

Ein separater, ausschließlich als Vergleichskörper dienender Meßkörper MK wird unabhängig von der Bestromung des Elektromotors durch einen von der Steuerungsvorrichtung gesteuerten separaten Heizstrom auf eine vorgegebene Temperatur erwärmt, um anhand eines bekannten Abkühlungsverhaltens ein Zeitintervall (Dauer der Bereitschaftsphase) zu ermitteln. Die Heizleistung zur Erwärmung des Meßkörpers MK wird durch den separaten Heizstrom von der Steuerungsvorrichtung gesteuert. Die vorgegebene Temperatur wird anhand der Umgebungstemperatur variiert, so daß ein für die Analyse der Abkühlung des Elektromotors ausreichend langes Zeitintervall über die Abkühlung des separaten Meßkörpers MK bestimmt werden kann.

Die Lasttemperaturkenngröße LTKG und die vorgegebene Temperatur des Meßkörpers MK werden in Schritt 2 in einem nichtflüchtigen Speicher der Steuerungsvorrichtung gespeichert. Werden mehrere Elektromotoren durch die Steuerungsvorrichtung überwacht, wird die berechnete Lasttemperaturkenngröße LTKG jedes Elektromotors gepeichert und in Schritt 3 die Steuerungsvorrichtung im wesentlichen stromlos geschaltet (analog FIG 2).

Nach dem Aufwecken der Steuerungsvorrichtung zum Einschaltzeitpunkt in Schritt 4 werden in Schritt 5 die gespeicherten Werte aus dem nichtflüchtigen Speicher ausgelesen. Mit dem gemessenen charakteristischen Temperaturmeßwert aus Schritt 6 und weiteren Einflußgrößen, beispielsweise der aktuellen Umgebungstemperatur, wird die aktuelle Lasttemperaturkenngröße LTKG für die zweite Betriebsphase 2.BtrPh berechnet.

Alternativ zu den beiden zuvor beschriebenen Abläufen zur Berechnung der Lasttemperaturkenngröße LTKG wird zur Überwachung mehrerer Elektromotoren durch die Steuerungsvorrichtung für jeden Elektromotor die Temperaturmeßgröße eines dem Elektromotor zugeordneten Meßkörpers MK ausgewertet.

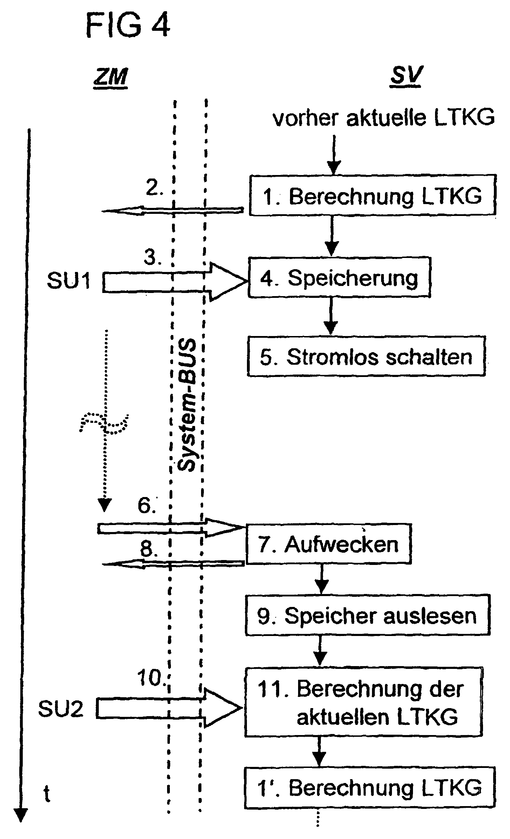

In FIG 4 ist eine alternative dritte schematische Darstellung einer zeitlichen Abfolge zur Berechnung einer Lasttemperaturkenngröße LTKG dargestellt. Die Steuerungsvorrichtung SV ist über einen System-BUS mit einem Zentralmodul ZM als Elektronikmodul verbunden. Zwischen dem Zentralmodul ZM und der Steuerungsvorrichtung SV werden Daten mittels eines Protokolls ausgetauscht. Ein über den System-BUS gesendetes Datenwort weist einen Kopf zur Adressierung der Steuerungsvorrichtung und Daten mit einer Datenkennung zur Zuordnung der Daten, beispielsweise einer Systemuhrzeit SU1 oder SU2. Die Datenkennung enthält eine Bitfolge anhand derer die Steuerungsvorrichtung erfaßt, daß es sich bei den empfangenen Daten um eine gesendete Systemuhrzeit SU1 oder SU2 handelt.

Zur Berechnung der Lasttemperaturkenngröße LTKG analog einem der Berechnungsverfahren aus FIG 2 oder FIG 3 wird zusätzlich die Wärmekapazität des Elektromotors als Verzögerung der Erwärmung ausgewertet. Zudem wird die Umgebungstemperaturmeßgröße aus der Temperatur in der Nähe der Steuerungsvorrichtung SV gemessen und ein für den Abschaltzeitpunkt der Steuerungsvorrichtung SV charakteristischer Wert der Umgebungstemperaturmeßgröße in Schritt 4 gespeichert.

Zuvor fordert die Steuerungsvorrichtung SV in Schritt 2 über den System-BUS von dem Zentralmodul ZM die erste Systemuhrzeit SU1 als zweite Kenngröße an, die in Schritt 3 über den System-BUS an die Steuerungsvorrichtung SV übertragen und dort in Schritt 4 ebenfalls gespeichert wird.

Alternativ zum Abfragen der Systemuhrzeit SU1 kann die Systemuhrzeit zyklisch, beispielsweise alle 20 Sekunden, über den System-BUS an alle Funktionseinheiten und Verbraucher gleichzeitig übertragen werden. Eine zeitliche Unschärfe von, beispielsweise ein Zeitintervall von 20 Sekunden ist als zeitlicher Fehler zur Bestimmung der Temperatur des Elektromotors für einen in Relation zum Zeitintervall langsam abkühlenden Elektromotor unkritisch.

In Schritt 5 wird die Steuerungsvorrichtung im wesentlichen stromlos geschalten. Nach einer Bereitschaftphase wird in Schritt 7 die Steuerungsvorrichtung SV über den System-BUS von dem Zentralmodul ZM geweckt. Hierzu sendet das Zentralmodul ZM in Schritt 6 ein Wecksignal, beispielsweise aufgrund der Öffnung des Türschlosses. Nachfolgend sendet die Steuerungsvorrichtung SV wiederum die Anforderung einer zweiten Systemuhrzeit SU2 die im Schritt 10 über den System-BUS an die Steuerungsvorrichtung SV übertragen wird.

Zuvor oder gleichzeitig wird der Speicher der Steuerungsvorrichtung SV ausgelesen und zur Berechnung der aktuellen Lasttemperaturkenngröße LTKG in Schritt 11 werden die gespeicherte Lasttemperaturkenngröße LTKG des Abschaltzeitpunktes, die Umgebungstemperaturmeßgröße des Abschaltzeitpunktes, die beiden Systemuhrzeiten SU1 und SU2 als Zeitkennungen und die Umgebungstemperaturmeßgröße des Einschaltpunktes ausgewertet. Wird hierzu beispielsweise ein exponentielles Abkühlen des Elektromotors angenommen, so kann für eine während der Bereitschaftsphase konstante Umgebungstemperatur die Lasttemperaturkenngröße LTKG des Elektromotors zu

$$LTKG_{aktuell} = LTKG_{Abschaltzpkt}e^{-K(SU2-SU1)}$$

bestimmt werden, wobei $LTKG_{Abschaltzpkt}$ die Lasttemperaturkenngröße LTKG zum Abschaltzeitpunkt und $K$ der Exponentialfaktor ist.

Zur Auswertung wird ein für die Abkühlung des Elektromotors charakterischer Algorithmus verwendet, der alle Umgebungsparameter des Elektromotors mit einbezieht. Beispielsweise kann auf einfache Weise zusätzlich eine sich ändernde Umgebungstemperatur als variable in den Exponentialfaktor einbezogen werden. Die Parameter des Algorithmus, beispielsweise ein Logarithmusfaktor oder ein Proportionalfaktor, werden für einen Elektromotortyp anhand einer Wärmekapazität und einem Wärmeübergangswiderstand zur umgebenden Luft festgelegt und sind in einem Speicher (ROM) der Steuerungsvorrichtung gespeichert. Die Umgebungstemperaturmeßgröße wird ebenfalls als temperaturabhängige Einflußgröße des Algorithmus zur Berechnung der Lasttemperaturkenngröße LTKG, beispielsweise durch die genannte Einbeziehung in den Exponentialfaktor, ausgewertet.

Alternativ zu der zuvor beschriebenen Berechnungsmethode, werden die Parameter des Algorithmus und auch die Art des Algorithmus (Wurzelterme, Proportionalterme, Exponentialterme) entsprechend veränderter Umgebungsbedingungen mit veränderten Parametern angesetzt und der Algorithmus jeweils neu gebildet. So wird aus elektromotorspezifischen Kennwerten und beispielsweise der Umgebungstemperaturmeßgröße die Parameter und Faktoren des Algorithmus angeglichen. Anstelle eines Algorithmus wird das Abkühlverhalten über die Interpolation von Standartmeßwerten bestimmt.

Die Berechnung der Lasttemperaturkenngröße LTKG von Schritt 1' erfolgt analog der von Schritt 1, mit der berechneten aktuellen LTKG aus Schritt 11.

Wurde der Elektromotor während der Betriebsphase überhitzt, wird von der Steuerungsvorrichtung SV eine Fehlermeldung an das Zentralmodul ZM als zentrales Diagnosemodul über den System-BUS übermittelt.

## Bezugszeichenliste

| | |
|---|---|
| LTKG | Lasttemperaturkenngröße, Temperatur des Lasttelementes |
| S2 | Unterer Schwellwert zur Temperaturüberwachung |
| S1 | Oberer Schwellwert zur Temperaturüberwachung |
| MK | Meßkörper, Kühlkörper |
| 1.BtrPh | erste Betriebsphase |
| 2.BtrPh | zweite Betriebsphase |
| BrtPh | Bereitschaftsphase, Sleep-mode |
| ZM | Zentralmodul, Systemuhr |
| SV | Steuerungsvorrichtung |
| SU1 | Systemuhrzeit zum Abschaltzeitpunkt |
| SU2 | Systemuhrzeit zum Einschaltzeitpunkt |
| System-BUS | Systembus |

## Patentansprüche

1. Verfahren zur Überwachung auf thermische Überlastung eines elektrischen Lastelementes in einem Kraftfahrzeug mit weiteren elektrischen Verbrauchern, die innerhalb einer Betriebsphase zumindest teilweise bestromt werden, bei dem die Überwachung des Lastelementes durch eine Steuerungsvorrichtung zumindest anhand einer berechneten Lasttemperaturkenngröße erfolgt, wobei

   - während einer ersten Betriebsphase der Steuerungsvorrichtung zur Berechnung der Lasttemperaturkenngröße eine Verlustleistung des Lastelementes oder eine hierzu im wesentlichen proportionale Größe ausgewertet wird,
   - während einer oder mehrerer Bereitschaftsphasen der Steuerungsvorrichtung zwischen der ersten Betriebsphase und einer zweiten Betriebsphase die Steuerungsvorrichtung im wesentlichen stromlos geschaltet wird, so dass keine Auswertung der Lasttemperaturkenngröße möglich ist, und
   - nach einem Einschalten der Steuerungsvorrichtung in der zweiten Betriebsphase der Steuerungsvorrichtung zur Berechnung der aktuellen Lasttemperaturkenngröße mindestens eine erste Kenngröße ausgewertet wird, die den Einschaltzeitpunkt der Steuerungsvorrichtung charakterisiert.

2. Verfahren nach Anspruch 1, wobei mindestens eine für einen Abschaltzeitpunkt der ersten Betriebsphase charakteristische zweite Kenngröße in einem nichtflüchtigen Speicher gespeichert wird, und

zur Berechnung der Lasttemperaturkenngröße die erste Kenngröße und die zweite Kenngröße ausgewertet werden.

3. Verfahren nach einem der Ansprüche 1 oder 2, wobei
die erste Kenngröße über eine Datenverbindung von einem Elektronikmodul des Kraftfahrzeugs zur Steuerungsvorrichtung übertragen wird.

4. Verfahren nach Anspruch 3, wobei
als erste Kenngröße eine Zeitkennung von einer Systemuhr über die Datenverbindung an die Steuerungsvorrichtung übermittelt wird.

5. Verfahren nach Anspruch 4, wobei
die Zeitkennung zyklisch übermittelt wird.

6. Verfahren nach Anspruch 4, wobei
die Zeitkennung für den Einschaltzeitpunkt übermittelt wird.

7. Verfahren nach Anspruch 6, wobei
die Datenverbindung ein Systembus ist, über den mittels eines Datenprotokolls die Zeitkennung an die Steuerungsvorrichtung adressiert wird.

8. Verfahren nach Anspruch 7, wobei
die Steuerungsvorrichtung die Zeitkennung über ein Datenprotokoll von dem Elektronikmodul anfordert.

9. Verfahren nach Anspruch 2 und einem der Ansprüche 3 bis 8, wobei
mehrere Lastelemente von der Steuerungsvorrichtung überwacht werden, und zur Berechnung die Lasttemperaturkenngrößen zum Abschaltzeitpunkt und der Abschaltzeitpunkt gespeichert und zum Einschaltzeitpunkt ausgewertet werden.

10. Verfahren nach Anspruch 3, wobei
ein Endwert der Lasttemperaturkenngröße zum Abschaltzeitpunkt der ersten Betriebsphase Ober einen Systembus als Datenverbindung von der Steuerungsvorrichtung an das Elektronikmodul übermittelt wird und mit einem ersten Zeitwert im Elektronikmodul gespeichert wird, und
nach dem Einschaltzeitpunkt der erste Zeitwert und der den Einschaltzeitpunkt charakterisierende zweite Zeitwert oder eine Differenz der Zeitwerte, sowie der Endwert von dem Elektronikmodul an die Steuerungsvorrichtung übermittelt wird.

11. Verfahren nach Anspruch 10, wobei
in einem Datenprotokoll Lastelementkennungen über den Systembus übermittelt werden, und der übertragene erste Zeitwert, zweite Zeitwert und der Endwert den Lastelementkennungen zugeordnet werden.

12. Verfahren nach einem der vorhergehenden Ansprüche, wobei
eine Umgebungstemperaturmeßgröße aus der Temperatur in der Nähe der Steuerungsvorrichung gemessen wird, und
ein für den Einschaltzeitpunkt charakteristischer erster Wert der Umgebungstemperaturmeßgröße als eine der ersten Kenngrößen ausgewertet wird.

13. Verfahren nach den Ansprüchen 2 und 12, wobei
ein für den Abschaltzeitpunkt charakteristischer zweiter Wert der Umgebungstemperaturmeßgröße als eine der zweiten Kenngrößen gemessen wird.

14. Verfahren nach einem der Ansprüche 12 oder 13, wobei
anhand der aktuellen Lasttemperaturkenngröße und der Umgebungstemperaturmeßgröße für Abweichungen unterhalb eines Schwellwertes (zur Meßgenauigkeit) die Lasttemperaturkenngröße gleich der Umgebungstemperaturmeßgröße gesetzt wird.

15. Verfahren nach einem der vorhergehenden Ansprüche, wobei
für ein Zeitintervall zwischen der ersten Betriebsphase und dem Einschaltzeitpunkt, das größer einem Zeitschwellwert ist, die Lasttemperaturkenngröße gleich der Umgebungstemperaturmeßgröße gesetzt wird.

16. Verfahren nach einem der vorhergehenden Ansprüche, wobei
im Falle einer Überhitzung eine Fehlermeldung an ein zentrales Diagnosemodul übermittelt wird, und zusätzlich die Funktion eines Thermoschalters überwacht wird, so daß ein Fehler in der Zuteilung von einem Ansprechen eines Thermoschalters wegen thermischer Überlastung unterschieden wird.

**Claims**

1. Method for monitoring thermal overload of an electric load element in a motor vehicle with further electric consumers which can be at least partially supplied with current within an operating phase, in which

- the load element is monitored by a controller at least with the aid of a calculated load temperature parameter, wherein

- a power loss in the load element or a variable substantially proportional thereto is evaluated during a first operating phase of the controller to calculate the load temperature parameter,

- during one or more stand-by phases of the controller the latter is switched with substantially no current between the first operating phase and a second operating phase, so an evaluation of the load temperature parameter is not possible, and

- after the controller has been switched on in the second operating phase thereof at least one first parameter which characterises the switching-on instant of the controller, is evaluated to calculate the current load temperature parameter.

2. Method according to claim 1, wherein at least one second parameter characteristic of a switching-off instant of the first operating phase is stored in a non-volatile memory, and the first parameter and the second parameter are evaluated to calculate the load temperature parameter.

3. Method according to either of claims 1 or 2 , wherein the first parameter is transmitted via a data circuit from an electronic module of the motor vehicle to the controller.

4. Method according to claim 3, wherein a time code is transmitted via the data circuit from a system clock to the controller as the first parameter.

5. Method according to claim 4, wherein the time code is transmitted cyclically.

6. Method according to claim 4, wherein the time code is transmitted for the switching-on instant.

7. Method according to claim 6, wherein the data circuit is a system bus via which the time code is addressed to the controller by means of a data protocol.

8. Method according to claim 7, wherein the controller requests the time code from the electronic module via a data protocol.

9. Method according to claim 2 and any of claims 3 to 8, wherein a plurality of load elements are monitored by the controller and for calculation the load temperature parameters at the switching-off instant and the switching-off instant are stored and are evaluated at the switching-on instant.

10. Method according to claim 3, wherein an end value of the load temperature parameter at the switching-off instant of the first operating phase is transmitted via a system bus as data circuit from the controller to the electronic module and is stored in the electronic module with a first time value, and after the switching-on instant the first time value and the second time value characterising the switching-on instant, or a difference in the time values, and the end value is transmitted from the electronic module to the controller.

11. Method according to claim 10, wherein load element codes are transmitted in a data protocol via the system bus, and the transmitted first time value, second time value and the end value are assigned to the load element codes.

12. Method according to any of the preceding claims wherein an ambient temperature measured variable is measured from the temperature in the vicinity of the controller, and a first value of the ambient temperature measured variable characteristic of the switching-on instant is evaluated as one of the first parameters.

13. Method according to claims 2 and 12, wherein a second value of the ambient temperature measured variable characteristic of the switching-off instant is measured as one of the second parameters.

14. Method according to either of claims 12 or 13, wherein the load temperature parameter is set equal to the ambient temperature measured variable with the aid of the current load temperature parameter and the ambient temperature measured variable for deviations below a threshold (for measuring accuracy).

15. Method according to any of the preceding claims wherein the load temperature parameter is set equal to the ambient temperature measured variable for a time interval between the first operating phase and the switching-on instant, the interval being greater than a time threshold.

16. Method according to any of the preceding claims, wherein in the event of overheating an error message is transmitted to a central diagnosis module and, in addition, the function of a thermoswitch is monitored, so a fault in the supply line is distinguished from a thermoswitch response owing to thermal overloading.

## Revendications

1. Procédé de surveillance de la surcharge thermique d'un élément de charge électrique dans un véhicule à moteur comportant d'autres utilisateurs électriques qui sont alimentés en courant, du moins partiellement, dans une phase de fonctionnement, dans lequel
la surveillance de l'élément de charge est assurée par un dispositif de commande, du moins à l'aide d'un paramètre de température de charge calculé,

- une dissipation de l'élément de charge ou une grandeur essentiellement proportionnelle à cela étant analysée pendant une première phase de fonctionnement du dispositif de commande pour le calcul du paramètre de température de charge,
- le dispositif de commande étant essentiellement au repos pendant une ou plusieurs phases de veille du dispositif de commande entre la première phase de fonctionnement et une seconde phase de fonctionnement, de sorte qu'une analyse du paramètre de température de charge soit possible, et
- au moins un premier paramètre étant analysé, qui caractérise le moment de la mise sous tension du dispositif de commande, après une mise sous tension du dispositif de commande dans la deuxième phase de fonctionnement du dispositif de commande pour le calcul du paramètre de température de charge.

2. Procédé selon revendication 1,
au moins un deuxième paramètre caractéristique d'un moment de mise hors tension de la première phase de fonctionnement étant enregistré dans une mémoire non volatile et, le premier paramètre et le second paramètre étant analysés pour le calcul du paramètre de température de charge.

3. Procédé selon l'une quelconque des revendications 1 ou 2,
le premier paramètre étant transmis, via une connexion de données, depuis un module électronique du véhicule à moteur vers le dispositif de commande.

4. Procédé selon revendication 3,
un code temps étant transmis par une horloge système au dispositif de commande via la connexion de données en tant que premier paramètre.

5. Procédé selon revendication 4,
le code temps étant transmis de manière cyclique.

6. Procédé selon revendication 4,
le code temps étant transmis pour le moment de mise sous tension.

7. Procédé selon revendication 6,
la connexion de données étant un bus système par lequel le code temps est adressé au dispositif de commande au moyen d'un protocole de données.

8. Procédé selon revendication 7,
le dispositif de commande demandant le code temps au module électronique via un protocole de données.

9. Procédé selon revendication 2 et l'une quelconque des revendications 3 à 8,
plusieurs éléments de charge étant surveillés par le dispositif de commande et les paramètres de température de charge, pour le calcul, étant analysés au moment de la mise hors tension et le moment de la mise hors tension étant enregistré, et analysé au moment de la mise sous tension.

10. Procédé selon revendication 3,
une valeur finale du paramètre de température de charge étant transmise, par le dispositif de commande au module électronique, au moment de la mise hors tension de la première phase de fonctionnement via un bus système en tant que connexion de données et enregistrée dans le module électronique avec une première valeur temps, et
après le moment de mise sous tension, la première valeur temps et la deuxième valeur temps caractérisant le moment de mise sous tension ou une différence des valeurs temps ainsi que la valeur finale étant transmises par le module électronique au dispositif de commande.

11. Procédé selon revendication 10,
des codes d'élément de charge étant transmis via le bus système dans un protocole de données et la première valeur temps, deuxième valeur temps et valeur finale transmises étant affectées aux codes d'élément de charge.

12. Procédé selon l'une quelconque des revendications précédentes,
un grandeur de mesure de la température ambiante étant mesurée à partir de la température à proximité du dispositif de commande, et
une première valeur, caractéristique du moment de mise sous tension, de la grandeur de mesure de la température ambiante étant analysée comme l'un des premiers paramètres.

13. Procédé selon les revendication 2 et 12,
une deuxième valeur, caractéristique du moment de la mise hors tension, de la grandeur de mesure de la température ambiante étant mesurée comme l'un des deuxièmes paramètres.

14. Procédé selon l'une quelconque des revendications 12 ou 13,
le paramètre de température de charge étant mis à égalité avec la grandeur mesurée de la température ambiante à l'aide du paramètre de température de charge du moment et de la grandeur mesurée de la température ambiante pour les écarts au-dessous d'une valeur de seuil (pour la précision de mesure).

15. Procédé selon l'une quelconque des revendications précédentes,
le paramètre de température de charge étant mis à égalité avec la grandeur mesurée de la température ambiante pour un intervalle de temps entre la première phase de fonctionnement et le moment de mise sous tension, intervalle qui est supérieur à la valeur de temps seuil.

16. Procédé selon l'une quelconque des revendications précédentes,
un message d'erreur étant transmis à un module diagnostique central en cas de surchauffe et,
en complément, la fonction d'un thermorupteur étant surveillée, de manière à distinguer une erreur dans le conducteur d'amenée de la commutation d'un thermorupteur à cause d'une surcharge thermique.

FIG 1

# FIG 2

vorher aktuelle LTKG

```
┌─────────────────────────┐      ┌──────────┐
│ 1. Berechnung LTKG      │      │ Einfluß- │
│    Korrelation der       │      │ größen   │
│    Temperatur des MK    │◄─────│          │
│    Erwärmung  MK        │      └──────────┘
└─────────────────────────┘
```
                                              } 1. BtrPh

```
┌─────────────────────────┐
│ 2. Stromlos schalten    │
└─────────────────────────┘
```

```
┌─────────────────────────┐
│ 3. Aufwecken     │◄──── Bedienschalter
└─────────────────────────┘
```
                                              } BrtPh

```
┌─────────────────────────┐
│ 4. Messung des MK       │
└─────────────────────────┘
```

```
┌─────────────────────────┐      ┌──────────┐
│ 6. Berechnung der       │◄─────│ Einfluß- │
│    aktuellen LTKG       │      │ größen   │
└─────────────────────────┘      └──────────┘
```
                                              } 2. BtrPh

```
┌─────────────────────────┐      ┌──────────┐
│ 1'.Berechnung LTKG      │      │ Einfluß- │
│    Korrelation der       │      │ größen   │
│    Temperatur des MK    │◄─────│          │
│    Erwärmung  MK        │      └──────────┘
└─────────────────────────┘
```

t

## FIG 3

vorher aktuelle LTKG

1. Berechnung LTKG
Erwärmung  MK

Einflußgrößen

2. Speicherung

3. Stromlos schalten

4. Aufwecken

5. Speicher auslesen

6. Messung

7. Berechnung der
aktuellen LTKG

Einflußgrößen

1. BtrPh

BrtPh

2. BtrPh

t

# FIG 4

**ZM**  **SV**

vorher aktuelle LTKG

2. ← [ 1. Berechnung LTKG ]

3. →
SU1 → [ 4. Speicherung ]

[ 5. Stromlos schalten ]

System-BUS

6. →
← 8. [ 7. Aufwecken ]

[ 9. Speicher auslesen ]

10. →
SU2 → [ 11. Berechnung der aktuellen LTKG ]

t

[ 1'. Berechnung LTKG ]